# EUROPÄISCHE PATENTSCHRIFT

(11) **EP 2 527 798 B1**
(45) Veröffentlichungstag und Bekanntmachung des Hinweises auf die Patenterteilung: **21.08.2019**
(21) Anmeldenummer: 11004088.8
(22) Anmeldetag: 18.05.2011
(51) Int. Cl.: G01F 11/28, G01N 1/20

(54) **Volumenzähler**
Volume meter
Compteur volumétrique

(43) Veröffentlichungstag der Anmeldung: 28.11.2012
(73) Patentinhaber: Arnold Holstein GmbH, 88677 Markdorf (DE)
(72) Erfinder: Holstein, Arnold, 88677 Markdorf (DE)
(74) Vertreter: Otten, Roth, Dobler & Partner mbB Patentanwälte

(56) Entgegenhaltungen:
- DE-C1- 19 955 989
- DE-U1- 20 221 158
- US-B1- 6 199 599

## Beschreibung

Die Erfindung betrifft einen Volumenzähler zur Bestimmung des Volumens einer durchfließenden Flüssigkeit und zur Entnahme eines definierten Probenvolumens aus der Flüssigkeit, insbesondere zur Bestimmung des Volumens und des Alkoholgehalts eines alkoholhaltigen Gemisches für Verschlussbrennereien, nach dem Oberbegriff des Anspruches 1.

Aus dem Stand der Technik ist beispielsweise aus der EP 1 420 230 A2 ein Volumenzähler für Verschlussbrennereien bekannt. Dieser Volumenzähler dient dazu, bei der Erzeugung von Branntwein zum einen das Volumen, zum anderen den Alkoholgehalt des Erzeugnisses zu erfassen. Verschlussbrennereien sind nämlich zu einer derartigen Erfassung verpflichtet sind, da die von ihnen zu entrichtenden Steuern danach bestimmt werden. In der Bundesrepublik Deutschland ist die Bundesmonopolverwaltung die entsprechende zuständige Behörde. Der in der EP 1 420 230 A2 vorgeschlagene Volumenzähler umfasst daher unter anderen einen Volumenbehälter, der eine genau definierte Menge des zu vermessenden Alkohol/Wassergemischs fassen kann. Um oftmals stark differierende Konzentrationen des Alkohol/Wassergemischs während eines Brenndurchgangs besser ausgleichen zu können, wird gemäß diesem Stand der Technik vorgeschlagen, dem Volumenbehälter in Durchlaufrichtung des Alkohol/Wassergemischs durch den Volumenzähler einen Mischbehälter vorzuschalten, um eine zusätzliche Durchmischung des Alkohol/Wassergemischs durchführen zu können.

Aufgabe der Erfindung ist es, einen Volumenzähler vorzuschlagen, der eine gute Durchmischung der Flüssigkeit ermöglicht und dennoch vergleichsweise einfach hergestellt werden kann.

Die Aufgabe wird, ausgehend von einem Volumenzähler der eingangs genannten Art, durch die kennzeichnenden Merkmale des Anspruchs 1 gelöst.

Durch die in den abhängigen Ansprüchen genannten Maßnahmen sind vorteilhafte Weiterbildungen und Ausführungen der Erfindung möglich.

Dementsprechend zeichnet sich ein erfindungsgemäßer Volumenzähler dadurch aus, dass die Ablaufvorrichtung eine Abzweigung aus der Flüssigkeitsleitung aufweist, um einen Teil der Flüssigkeit auszusondern und die Abzweigung wiederum eine Probenaufnahmevorrichtung zur Aufnahme eines definierten Probenvolumens umfasst.

Um mit dem Volumenzähler das Volumen der durchfließenden Flüssigkeit, beispielsweise des Branntwein-Erzeugnisses, abmessen zu können, sind einzelne, sog. Schüttungszyklen vorgesehen. Dabei wird die abzumessende Flüssigkeit, beispielsweise das Alkohol/Wassergemisch, in den Volumenbehälter zur Aufnahme eines definierten Flüssigkeitsvolumens eingefüllt. Am Ende des Schüttungszyklus wird der Volumenbehälter wieder entleert, und zwar durch die Ablaufvorrichtung zum Ablaufen der Flüssigkeit aus dem Volumenbehälter. Die Flüssigkeit fließt dabei durch eine Flüssigkeitsleitung der Ablaufvorrichtung.

Der erfindungsgemäße Volumenzähler zeichnet sich dabei dadurch aus, dass die Ablaufvorrichtung eine Abzweigung aus der Flüssigkeitsleitung aufweist, um einen Teil der Flüssigkeit auszusondern. Dabei wird das Prinzip ausgenutzt, dass bei Entleerung des Volumenbehälters nochmals eine Durchmischung stattfindet. Zudem weist die Abzweigung eine Probenaufnahme zur Aufnahme eines definierten Probenvolumens auf. Ein Teil der ausgesonderten Flüssigkeit kann somit in die Probenaufnahmevorrichtung gelangen. Das vordefinierte Probenvolumen wird aufgefüllt, während der übrige, nicht ausgesonderte Teil der durchströmenden Flüssigkeit weiter durch die Flüssigkeitsleitung gelangt und somit schließlich ablaufen kann. Die durch die Ablaufvorrichtung durchgelaufene Flüssigkeit, die sich nicht im Probenvolumer. angesammelt hat, kann in einem entsprechenden Auffangbehälter aufgefangen werden bzw. in entsprechenden Behältnissen abgefüllt werden.

Beim Übergang vom Volumenbehälter zur Flüssigkeitsleitung, welche z. B. unterschiedliche Querschnitte aufweisen, können regelmäßig Verwirbelungen auftreten, die eine Durchmischung der Flüssigkeit ermöglichen.

Damit der Volumenbehälter bei jedem Schütturgszyklus zunächst befüllt werden kann und die entsprechende Flüssigkeit nicht durch die Ablaufvorrichtung durchläuft oder bereits schon beim Befüllen in das Probenvolumen gelangt, ist es vorteilhaft, bei einer Ausführungsform der Erfindung ein Ventil zwischen dem Volumenbehälter und der Abzweigung anzuordnen. Dieses Ventil kann entsprechend am Ende des Schüttungszyklus, wenn der Volumenbehälter entleert werden soll und das Probenvolumen aufgefüllt wird, geöffnet werden, während es entsprechend beim Befüllen des Volumenbehälters geschlossen ist.

Grundsätzlich ist es denkbar, die Abzweigung in die Probenaufnahmevorrichtung, die das Probevolumen bereitstellt, münden zu Lassen, etwa im Sinne eines Behälters. Es ist aber auch möglich, die Prcbenaufnahmevorrichtung innerhalb der Abzweigung anzuordnen. Diese Möglichkeit wird insbesondere dadurch begünstigt, dass das entsprechende Probenvolumen in der Regel relativ klein im Verhältnis zum Volumenbehälter ist. Durch eine Anordnung innerhalb der Abzweigungsleitung kann die Gefahr einer Blasenbildung von Luftblasen noch einmal verringert werden.

Eine besonders vorteilhafte Weiterbildung der Erfindung sieht ferner vor, die Probenaufnahmevorrichtung unmittelbar im Bereich der Abzweigung anzuordnen. Dies kann zum einen deshalb zweckmäßig sein, da Leitungsweg auf dem abgezweigten Pfad eingespart werden kann. Da zudem ohnehin nur ein geringes Probenvolumen abgefüllt zu werden braucht, muss grundsätzlich auch nur eine gewisse Menge an Flüssigkeitsvolumen abgezweigt bzw. ausgesondert werden.

Bei einer Ausführungsvariante der Erfindung kann beispielsweise die Abzweigung in Schwerkraftrichtung direkt unter dem Ablauf des Volumenbehälters angeordnet sein. Insbesondere ist es vorteilhaft, die Ablaufvorrichtung so auszubilden, dass der aus dem Volumenbehälter gelangende Flüssigkeitsstrom in Richtung der Probenaufnahmevorrichtung fließt, während die Flüssigkeit, die nicht ausgesondert wird, ihre Strömungsrichtung ändern muss, z.B. seitlich abgeleitet wird. Dadurch kann erreicht werden, dass das Probenvolumen auf jeden Fall beim Ablauf der Flüssigkeit aus dem Volumenbehälter befüllt wird und zusätzlich die Durchmischung noch einmal verbessert wird.

Bei einer Weiterbildung der Erfindung weist die Probenaufnahmevorrichtung eine Bohrung, deren Volumen den Probevolumen entspricht, auf. Eine solche Bohrung kann vorteilhafterweise in der Regel sehr präzise, also mit geringen Toleranzen, gefertigt werden, sodass auch das zur Probe entnommene Volumen dem tatsächlichen Probevolumen sehr genau entsprechen kann.

Grundsätzlich ist es lediglich notwendig, das vordefinierte Probenvolumen auszusondern. Sonstige Flüssigkeit soll grundsätzlich durch den Ablauf vollständig durch den Volumenzähler hindurch laufen und beispielsweise in einem Auffangbehälter aufgefangen werden. Da die Flüssigkeit, beispielsweise das Alkohol/Wassergemisch in erster Linie später verwendet bzw. verkauft werden soll. Würde mehr Flüssigkeit als das Probenvolumen ausgesondert, so würde dieser überschuss an Flüssigkeit über dem Probenvolumen hinaus verloren gehen. Ferner sollte vermieden werden, dass bei einer späteren Entnahme des Probenvolumens zusätzliche Flüssigkeit nachläuft bzw. "nachtröpfelt", da hierdurch die Messung verfälscht werden kann, d. h. mehr Flüssigkeit als Probenvolumen entnommen wird als ursprünglich vorgesehen war. Um dies zu vermeiden, ist bei einer Weiterbildung der Erfindung zwischen der Öffnung der Bohrung und der Abflussrinne in Strömungsrichtung ein Gefälle ausgebildet, sodass überschüssige Flüssigkeit zur Abflussrinne gelangen kann. Zudem wird dadurch ermöglicht, dass die entsprechende überschüssige Flüssigkeit noch in die Flüssigkeitsleitung gelangt und somit durch die Ablaufvorrichtung ablaufen kann, bis sie schließlich z. B. im Auffangbehälter aufgefangen wird.

Damit sich in dem Probensammelbehälter Flüssigkeit im Probevolumen zunächst ansammeln kann, bevor sie schließlich entnommen wird, ist es vorteilhaft, dass die Abzweigung über ein Ventil mit einem Probensammelbehälter zum Auffangen des Probenvolumens verbunden ist. Das Ventil ist also zwischen Probenaufnahmevorrichtung und Probensammelbehälter angeordnet. Hierdurch wird ein präzises Abfüllen des Volumenbehälters bzw. eines definierten Referenzvolumens ermöglicht.

Insbesondere ist es von Bedeutung, dass sich nach Möglichkeit keine Luftblasen beim Befüllen innerhalb des Volumenbehälters bzw. innerhalb der Probenaufnahmevorrichtung bilden, da sonst die erfasste Volumenmenge bzw. die bestimmte Alkoholkonzentration ungenau bzw. fehlerhaft ist. Da bei der bevorzugten Ausführungsform der Erfindung der Volumenzähler so ausgebildet ist, dass die Umrisslinien des Volumenbehälters in Strömungsrichtung weisen, sodass beim Befüllen mit Flüssigkeit keine Luftblasen gebildet werden, insbesondere, dass der Volumenzähler einen rautenförmigen Querschnitt aufweist. Sobald die Umrisslinien entweder horizontal verlaufen oder beispielsweise entgegen der Strömungsrichtung verlaufen, können sich gegebenenfalls Luftblasen, die nach oben steigen, anlagern. Ein weiteres Nach-oben-Steigen der Luftblasen kann in diesem Fall behindert sein, da die Luftblasen aufgrund der Formgebung eine Schwelle sonst überwinden müssten. Sodann besteht die Möglichkeit, dass das zu erfassende Volumen nicht korrekt bestimmt wird. Insbesondere kann es dadurch vorkommen, dass der bestimmte Wert in Bezug auf das Volumen größer ist als die tatsächliche Volumenmenge der Flüssigkeit. Dadurch jedoch, dass Umrisslinien des Volumenbehälters in Strömungsrichtung weisen, können die Luftblasen auch entgegen der Strömungsrichtung nach oben steigen und aus den Volumenbehälter gelangen, bis schließlich beim Befüllen lediglich Flüssigkeit im Volumenbehälter vorhanden ist.

Die Befüllung des Volumenbehälters kann beispielsweise über einen Zulauf geschehen, welcher wiederum über ein Ventil mit dem Volumenbehälter verbunden ist.

Auch hierdurch wird vorteilhafterweise ein präzises Abfüllen des Volumenbehälters bzw. eines definierten Referenzvolumens ermöglicht. Insbesondere dann, wenn sich der Volumenbehälter zwischen zwei entsprechenden Ventilen befindet, ist es möglich, den Volumenbehälter definiert abzuschließen und somit ein definiertes Volumen zu begrenzen.

Beim Befüllen eines Volumenbehälters hat es sich als besonders vorteilhaft erwiesen, den Volumenbehälter durch ein sog Überfüllen mit Flüssigkeit zu beladen. Ein Überfüllen in diesem Sinne bedeutet, dass der Volumenbehälter nicht nur bis zu seinem Rand gefüllt wird, der grundsätzlich für das vordefinierte Volumen die entsprechende Grenzmarke bedeutet, sondern darüber hinaus. Dafür gibt es verschiedene Gründe:

Wird generell ein Behältnis, etwa auch ein Trinkglas, bis zu einer gewissen Markierung befüllt, so ist die Befüllung allein aus dem Grunde fehlerbehaftet, da die Wahrnehmung, ob der Flüssigkeitsrand mit der Markierung übereinstimmt, subjektiv ist. Auch eine automatisierte Bestimmung, beispielsweise mit optischen oder kapazitiven Volumenmessgeräten muss gegebenenfalls kalibriert werden und ist ebenfalls durchaus fehlerbehaftet. Hinzu kommt, dass die Grenzfläche eines flüssigen Mediums zu einem gasförmigen Medium nicht immer vollkommen eben ist. Steht die Flüssigkeit in einem Behälter, der einen vergleichsweise geringen Querschnitt aufweist, so kann die Oberfläche der Flüssigkeit gekrümmt sein. Dieser Effekt ist insbesondere in einer dünnen Leitung oder Kapillare zu beobachten. Zu beachten ist hierbei insbesondere die Oberflächenspannung der Flüssigkeit. Wird aber der entsprechende Behälter darüber hinaus befüllt, sodass die Flüssigkeit über den Bereich hinaus verläuft, an dem sich eine solche Markierung befinden würde, so kann das entsprechende Volumen noch präziser abgegrenzt werden, wenn sich z. B. an der entsprechenden Position, an der ein vordefiniertes Volumen abzutrennen ist, ein Ventil befindet. Mit dem Ventil kann dann das vordefinierte Flüssigkeitsvolumen von der überstehenden Flüssigkeit abgetrennt werden. Zudem können durch das Überfüllen Luftblasen aus dem Volumenbehälter entfernt werden. Selbst dann, wenn sich beim Befüllen Luftblasen bilden, strömen diese - entgegen der Schwerkraftrichtung - nach oben, bis sie auf einen Bereich stoßen, in dem sich Luft befindet und sie über die Grenzfläche des Flüssigkeitsmediums entweichen können. Reicht das Flüssigkeitsmedium allerdings über den Volumenbehälter hinaus, so steigen die Luftblasen entsprechend aus dem Volumenbehälter, sodass dort schließlich nur noch Flüssigkeit verbleibt.

Um das Überfüllen erleichtern zu können, kann in Strömungsrichtung vor dem Ventil, welches dem Volumenbehälter vorgeschaltet ist, ein Pufferbehälter angeordnet sein, sodass durch "Überfüllen" des Volumenbehälters über das vorgeschaltete Ventil hinaus eine definierte Abmessung des Flüssigkeitsvolumens ermöglicht wird. Grundsätzlich wird bei dieser Ausführungsform ermöglicht, dass das Flüssigkeitsvolumen, das pro Schüttungszyklus in den Volumenzähler zugeführt wird, nicht unbedingt mit hoher Präzision bemessen sein muss - solange das zugeführte Volumen mindestens so groß wie das Volumen des Volumenbehälters (Überfüllen) ist. Um festzustellen, ob die zugeführte, eingefüllte Flüssigkeitsmenge ausreichend ist, ist der entsprechende Pufferbehälter vorgesehen. Erreicht beispielsweise der Flüssigkeitsstand diesen Pufferbehälter bzw. steht die Flüssigkeit in dem Pufferbehälter, ist die entsprechende Überfüllung erfolgt, d. h. der Volumenbehälter ist vollständig mit Flüssigkeit gefüllt.

Handelt es sich bei dem Volumenzähler um eine abgeschlossene, plombierte Vorrichtung, ist es ggf. unerwünscht, ein entsprechendes Sichtfenster vorzusehen. Insbesondere kann grundsätzlich jeder Schüttzyklus auch automatisiert ablaufen, sodass die Messung möglichst wenig von manuellem Zugriff abhängt. Aus diesem Grunde ist es vorteilhaft, in dem Pufferbehälter, beispielsweise in dessen Bodenwandung, einen Flüssigkeits- bzw. Fuchtigkeitssensor anzuordnen, sodass dieser erkennt, wenn die eingefüllte Flüssigkeit soweit eingefüllt ist, dass diese in dem Pufferbehälter steht bzw. dass zumindest ein Teil der Bodenwandung von der Flüssigkeit bedeckt ist.

Grundsätzlich ist es auch denkbar, keinen Pufferbehälter, sondern lediglich eine (schmale) Leitung vorzusehen und ferner entsprechend zu bestimmen (mittels eines Sensors), ob beim Überfüllen die Flüssigkeit in der entsprechenden Leitung steht. Dieses Verfahren kann allerdings Nachteile gegenüber der Verwendung eines Pufferbehälters aufweisen, da der Pufferbehälter in Bezug auf das eingefüllte Volumen größere Schwankungsbreiten bzw. Ungenaufgkeiten zulässt, indem nämlich diese Schwankungen durch das Aufnahmevolumen, dass der Pufferbehälter bietet, abgefangen werden kann. Zudem bietet ein Pufferbehälter die Möglichkeit, dass nach oben steigende Luftblasen besser entweichen können.

Ferner kann eine entsprechender Flüssigkeitssensor, der in einem Pufferbehälter angebracht ist, so angeordnet werden, dass es unwahrscheinlich ist, dass Flüssigkeitstropfen, die sich beispielsweise in einer herkömmlichen Leitung ansammeln, dazu führen, dass der Flüssigkeitssensor bereits einen Uberfüllungszustand anzeigt.

Bei einer besonderen Weiterbildung der Erfindung sind das Einlaufrohr zum Pufferbehälter und das Auslaufrohr in Schwerkraftrichtung übereinander angeordnet, sodass die eingefüllte Flüssigkeit durch den Pufferbehälter durchlaufen kann, ohne dass diese sich bereits zu Beginn des Befüllens am Boden ansammelt. Der Sensor kann dementsprechend seitlich weg von dem Zufluss bzw. Abfluss aus dem Pufferbehälter angeordnet werden, sodass die Wahrscheinlichkeit entsprechend gering ist, dass Flüssigkeit bereits beim Befüllen und bevor ein Überfüllungszustand erreicht ist, mit dem Sensor in Berührung kommt. Ferner ist es in diesem Zusammenhang z. B. vorteilhaft, dass der Boden des Pufferbehälters, sofern dort der Sensor angeordnet ist, vom Auslass des Pufferbehälters gesehen nach oben ansteigt, sodass die Flüssigkeit von dort aus tatsächlich nach oben steigen muss, um den Flüssigkeitssensor zu erreichen. Der Flüssigkeitssensor kann aber auch beispielsweise an der Seitenwand bzw. an der Deckenwand des Pufferbehälters angeordnet sein. Allerdings sind nicht allein Luftblasen dafür verantwortlich, dass die Erfassung eines Volumens möglicherweise ungenau ist.

Ein systematischer Fehler kann beispielsweise darin liegen, dass der Volumenbehälter tatsächlich nicht exakt das Volumen aufnimmt, das eigentlich gewünscht ist. Derartige Abweichungen können insbesondere fertigungsbedingt sein. Denkbar ist es beispielsweise, dass der entsprechende Volumenbehälter aus Edelstahlteilen verschweißt wird und die Schweißnähte nicht jedes Mal vollkommen identisch sind. Dies kann zu Abweichungen im tatsächlich aufgenommenen Volumen führen. Will man beispielsweise derartige Ungenauigkeiten bereits bei der Herstellung des Volumenbehälters ausschließen, so ist dies in den meisten Fällen mit sehr großem Aufwand verbunden und führt regelmäßig auch zu erhöhten Fertigungskosten. Im Allgemeinen ist es einfacher und auch kostengünstiger, im Nachhinein eine Feinkalibrierung durchzuführen. 3ei Anwendung für die Verschlussbrennerei werden beispielsweise derartige Volumenzähler von der Bundesmonopolverwaltung bzw. von einer Abteilung der Physikalisch-Technischen Bundesanstalt kontrolliert und auf ihre Genauigkeit hin überprüft. Dabei ist es beispielsweise üblich, durch die Außenwand des Volumenbehälters angeordnete Kalibrierstifte vorzusehen, welche je nachdem, ob das tatsächliche Volumen des Volumenbehälters zu groß oder zu klein ist, hinein oder hinaus geschoben werden. Allerdings sind derartige Kalibrierstifte gegenüber der Außenwand abzudichten, da sie typischerweise durch die Außenwand durchgesteckt werden. Diese Maßnahme ist mitunter sehr aufwendig und kann mit einem Austritt von Flüssigkeit verbunden sein, wenn beispielsweise infolge von Alterung bzw. Abnutzung die Abdichtung schlechter wird.

Dieser Nachteil kann dadurch vermieden werden, dass ein Tarierstift im Inneren des Volumenbehälters oder zumindest im Inneren der flüssigkeitsführenden Teile angeordnet ist. Dieser Tarierstift besitzt grundsätzlich den Vorteil, dass er die Außenwand nicht durchbricht und somit keine Abdichtungsprobleme aufgrund des Tarierstiftes auftreten können. Denkbar ist eine Ausführungsvariante, welche vorsieht, das tatsächliche Volumen in dem Volumenbehälter zu bestimmen. Ist das Fassungsvermögen des Volumenbehälters zu groß, wird ein entsprechender Tarierstift eingesetzt. Anschließend kann eine Nachkorrektur beispielsweise dadurch erfolgen, dass Teile des Tarierstiftes abgetrennt werden und somit das Fassungsvermögen des Volumenbehälters nachgebessert wird.

Denkbar ist auch, den Volumenbehälter bei der Fertigung grundsätzlich mit einer Tendenz zu fertigen, dass das Fassungsvermögen ohne Tarierstift etwas größer als das gewünschte Fassungsvermögen ist. Denn ein zu großes Volumen kann im Allgemeinen durch Einsetzen eines Tarierstiftes zu einem kleineren Volumen hin korrigiert werden.

Denkbar ist es ferner, Tarierstifte verschiedener Größen vorzusehen. Es ist aber grundsätzlich vorteilhaft, eine Feinkalibrierung durch Abtrennen einzelner Teile von dem Tarierstab vorzusehen, da dieses Abschneiden präzise vorgenommen werden kann und eine Feinabstimmung somit ermöglicht wird. Auch der Tarierstift sollte hinsichtlich seiner Formgebung vorteilhafterweise so ausgebildet sein, dass sich keine Luftblasen innerhalb des Volumenbehälters in Folge des angeordneten Tarierstiftes bilden können. Zudem kann der Tarierstift bei einer weiteren Ausführungsform der Erfindung so angeordnet sein, dass die Flüssigkeit beim Einlass in den Volumenbehälter mit dem Tarierstift in Kontakt kommt und sich somit bereits bei Einfüllung in den Volumenbehälter durchmischen kann. Dementsprechend dient der Tarierstift zum einen einer präziseren Volumenabfüllung, zum anderen aber auch einer besseren Durchmischung.

Gerade Volumenzähler, welche für Verschlussbrennereien gebaut sind, müssen regelmäßig von einem plombierbaren Gehäuse umgeben sein, damit keine Manipulation stattfinden kann, um etwa die zu entrichtenden Steuern herabsenken zu können. Denkbar ist es beispielsweise, über die Ablaufvorrichtung entgegen der Strömungsrichtung Wasser einzuleiten, welches in die Probenauffangvorrichtung gelangen kann und ein schließlich im Probensammelbehälter aufgefangenes Wasser/Alkoholgemisch weiter verdünnt. Ist nämlich der gemessene Alkoholgehalt geringer, fallen die zu entrichtenden Steuern auch geringer aus. Um dies zu verhindern, oder zumindest feststellen zu können, kann die Ablaufvorrichtung bei einer Ausführung der Erfindung eine Verzweigung umfassen, in welcher ein Stauungsanzeiger vorhanden ist, sodass bei einem Flüssigkeitsrückstau dieser mittels des Stauungsanzeigers anzeigbar ist. Ein derartiger Rückstau kann beispielsweise durch die Einleitung von Wasser entgegen der Strömungsrichtung in die Ablaufvorrichtung bewirkt werden. Die entsprechende Verzweigung kann beispielsweise nach oben, d. h. entgegen der Schwerkraftrichtung, ausgerichtet sein. Als Stauungsanzeiger ist es möglich, dort im Bereich eines Sichtfensters einen Stoff anzuordnen, der sich im Kontakt mit Alkohol verfärbt. Ist eine solche Verfärbung sichtbar, ist der Stoff also mit Alkohol in Verbindung gekommen und hat sich aus diesem Grunde verfärbt. Ein solcher Kontakt des Stauungsanzeiger mit der Flüssigkeit, z.B. mit Alkohol, kann lediglich durch einen Rückstau erfolgen, da bei einem regulären Ablauf durch die Flüssigkeitsleitung die Flüssigkeit nicht in die Verzweigung gelangen kann.

Daraus allein ist allerdings nicht eindeutig erkennbar, ob ein derartiger Rückstau durch einen bloßen Zufall oder aber absichtlich durch gezielte Manipulation zustande gekommen ist. Grundsätzlich sind beispielsweise Situationen denkbar, in denen der Ablauf aus irgendeinem Grund verstopft oder zumindest teilweise blockiert wird, sodass sich die abzulaufende Flüssigkeit nach hinten zurückstaut. Bei einer besonders bevorzugten Weiterbildung der Erfindung weist darauf die Ablaufvorrichtung ein Endstück auf, das wenigstens zwei. Öffnungen besitzt, sodass beim Verschließen einer Öffnung kein Rückstau erfolgt. Durch eine solche Verrichtung im Sinne eines Endstücks ist die Wahrscheinlichkeit eines Rückstaus geringer, da selbst dann, wenn eine der Öffnungen durch einen unglücklichen Zufall verstopft wird, die durchlaufende Flüssigkeit immer noch ungestört ablaufen kann.

Besonders bevorzugt ist es, die Öffnungen in dem Endstück nicht direkt nebeneinander liegend auszubilden, sondern an verschiedenen Stellend es Endstücks vorzusehen, sodass im Falle einer Verstopfung die andere Öffnung in der Regel nicht beeinflusse wird zumindest nicht unter gewöhnlichen Umständen. Insbesondere ist es vorteilhaft, mehrere Öffnungen vorzusehen. Außerdem ist es denkbar, dass Endstück so zu gestalten, dass die Öffnungen in verschiedene Richtungen weisen, an verschiedenen Stellen liegen, oder auch eventuell abgeschirmt sind, sodass die Wahrscheinlichkeit verringert wird, dass unter gewöhnlichen Umständen eine derartige Verstopfung der vorhandenen Öffnungen erfolgt die tatsächlich noch einen Rückstau zur Folge haben kann.

Des Weiteren ist es grundsätzlich bei Volumenzählern wichtig, eine gute Abdichtung zu gewährleisten. Zum einen ist eine solche Abdichtung deshalb notwendig, damit nicht ungewollt Flüssigkeit durch ein Leck austreten kann und somit beispielsweise eine Volumenmessung ungenau wird. Handelt es sich bei der durchfließenden Flüssigkeit beispielsweise um einen Alkohol/Wassergemisch, so könnten bei einer schlechten Abdichtung Alkoholdämpfe nach außen, d.h. aus dem Volumenzähler heraus, gelangen und ein deutliches Sicherheitsrisiko darstellen, da Alkohol brennbar ist und Alkoholdämpfe bei Entzündung zu Explosionen führen können. Dementsprechend ist es besonders vorteilhaft, den Bereich zwischen dem Zulauf, insbesondere dem Pufferbehälter und dem Endstück der Auslaufvorrichtung geschlossen auszubilden. Dies wird bei dem erfindungsgemäßen Volumenzähler bzw. bei den genannten Ausführungsformen und Weiterbildungen eines erfindungsgemäßen Volumenzählers insbesondere dadurch erleichtert, da in dem genannten Bereich keine Öffnungen oder Unterbrechungen der Außenwand nötig sind. Während des Schüttzyklus müssen lediglich die Ventile bedient werden, wobei auch diese keine Öffnung nach außen aufweisen. Daher bietet eine entsprechende Ausführungsform einen besonders guten Brand- bzw. Explosionsschutz.

Grundsätzlich sind alle Arten von Ventilen die für den entsprechenden Einsatz in einem Volumenzähler geeignet sind, denkbar. In Frage kommen unter anderem mechanische Ventile, pneumatische Ventile, elektrische oder hydraulische Ventile.

Bei einer Ausführungsform der Erfindung ist es ferner vorteilhaft, dass das dem Volumenbehälter vorgeschaltete Ventil und das zwischen Probenvolumen/Aufnahmevorrichtung und Probensammelbehälter geschaltete Ventil zusammengeschaltet sind, sodass eine gleichzeitige Schaltung dieser Ventile ermöglicht wird. Dementsprechend sind diese genannten Ventile zu Beginn des Schüttungszyklus, wenn der Volumenbehälter befüllt wird, geöffnet. Das unmittelbar hinter den Volumenbehälter angeordnete Ventil ist dabei geschlossen. Durch die eingefüllte Flüssigkeit füllt sich der Volumenbehälter und wird schließlich dann, wenn der gewünschte Füllstand erreicht bzw. überschritten ist, unterbrochen. Die beiden genannten Ventile, die sich jeweils oberhalb des Volumenbehälters und unterhalb der Abzweigung bzw. direkt vor dem Probensammelbehälter befinden, wieder geschlossen. Anschließend wird das Ventil, das sich unmittelbar zwischen Volumenbehälter und Abzweigung befindet, geöffnet. Dabei strömt die Flüssigkeit aus dem Volumenbehälter, füllt das Probenvolumen und der Rest der Flüssigkeit strömt durch die Flüssigkeitsleitung bzw. die Ablaufvorrichtung aus dem Volumenzähler in einen Auffangbehälter. Nach einer solchen Entleerung kann das Ventil zwischen Abzweigung und Volumenbehälter wieder geschlossen werden. Danach werden die anderen Ventile geöffnet, sodass das Probenvolumen in den Probensammelbehälter fließen kann, während wiederum der Volumenbehälter von oben wieder aufgefüllt wird. Dies kann die Automatisierung des Schüttungszyklus vereinfachen.

### Ausführungsbeispiel:

Ein Ausführungsbeispiel ist in der Zeichnung dargestellt und wird nachstehend unter Angabe weiterer Vorteile näher erläutert.

Im Einzelnen zeigt:

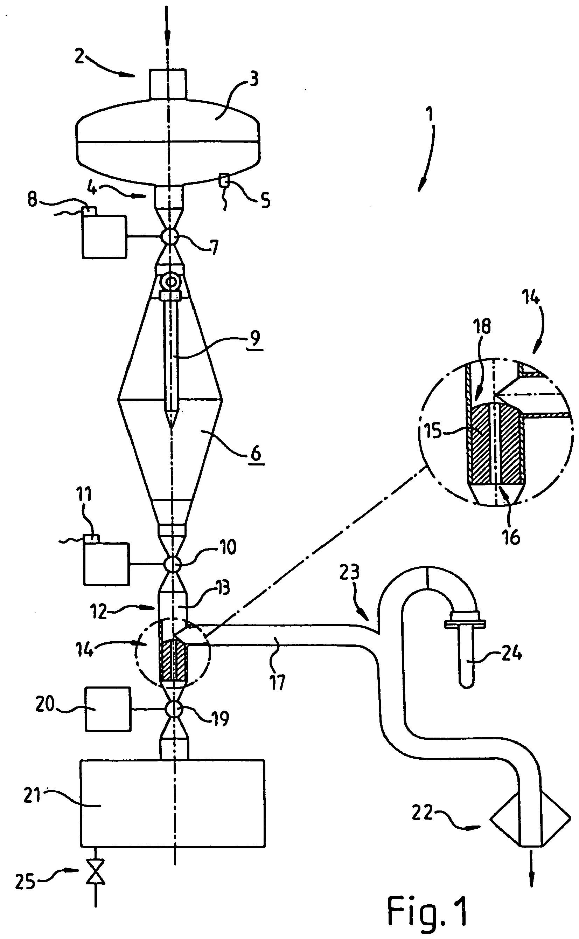

- Fig. 1: einen Volumenzähler gem. der Erfindung.

Figur 1 zeigt einen Volumenzähler für Verschlussbrennereien, bei dem das Volumen des erzeugten Branntweins in einzelnen Schüttzyklen gemessen und ferner anhand von gesammelten Probenvolumen der Alkoholgehalt bestimmt wird. Die Vorrichtung gem. Figur 1 umfasst einen Zulauf 2, der in einen Pufferbehälter 3 mündet. In Schwerkraftrichtung direkt unter dem Zulauf 2 befindet sich ein Auslauf 4 aus dem Pufferbehälter 3. An der Bodenwand des Pufferbehälters 3 ist ein Flüssigkeitssensor 5 angeordnet. Der Pufferbehälter 3 mit seinem Auslauf 4 mündet schließlich in einen Volumenbehälter 6. Zwischen dem Auslauf 4 des Pufferbehälters 3 und dem Volumenbehälter 6 ist ein Ventil 7 angeordnet, welches wiederum durch eine Steuerung 8 kontrolliert wird. In dem Volumenbehälter 6 ist ein Tarierstab 9 angeordnet. Der Tarierstab 9 ermöglicht eine Feinkalibrierung des Fassungsvermögens des Volumenbehälters 6.

Bei der Ausführungsform gem. Figur 1 ist der Zulauf 2 der Ablauf 4 aus dem Pufferbehälter 3 sowie die Leitung über das Ventil 7 in den Volumenbehälter 6 einschließlich der Anordnung des Tarierstabs 9 am Zugang zum Volumenbehälter 6 in Schwerkraftrichtung fluchtend angeordnet. Wird somit ein Alkohol/Wassergemisch durch den Zulauf 2 in den Volumenzähler 1 eingefüllt, so fällt dieses Alkohol/Wassergemisch zunächst durch den Pufferbehälter 3, ohne dabei sich an dessen Bodenwand aufzustauen und mit dem höher angeordneten Sensor 5 in Berührung zu kommen. Die Flüssigkeit, welche durch das Ventil 7 hindurch tritt, gelangt zur Öffnung des Volumenbehälters 6 und gerät dort zunächst mit dem Tarierstab 9 in Kontakt, sodass die Flüssigkeit über den Tarierstab 9 verteilt und dadurch durchmischt wird.

Der Volumenbehälter 6 ist in seinem Querschnitt rautenförmig ausgebildet, d. h. in Strömungsrichtung verlaufen die Umrisslinien stets nach unten und weisen keine Komponente entgegen der Strömungsrichtung auf, sodass bei Befüllung des Volumenbehälters 6 ein blasenfreies Befüllen ermöglicht wird. Entstehen beim Befüllen dennoch Luftblasen so können diese nach oben steigen und gelangen schließlich in den Pufferbehälter 3, wo sie sich dementsprechend auflösen können.

Der Volumenbehälter 6 kann überfüllt werden, d. h, die Befüllung findet so lange statt, bis die Flüssigkeit über den Volumenbehälter 6 hinaus durch das Ventil 7 hindurch in den Ablauf 4 des Pufferbehälters 3 gelangt und sich bis zum Boden des Pufferbehälters 3 ansammelt, Erreicht der Flüssigkeitsstand den Flüssigkeitssensor 5, so gibt dieser ein entsprechendes Signal an die Kontrollvorrichtung des Volumenzählers an die Kontrcllvorrichtung des Volumenzählers 1 ab. Über diese Kontrollvorrichtung (in Figur 1 nicht weiter dargestellt) wird mittels der Steuerung 8 das Ventil 7 geschlossen. Somit ist ein genau vorher definiertes Flüssigkeitsvolumen in dem Volumenbehälter 6 zwischen den Ventilen 7 und einem in Strömungsrichtung hinter dem Volumenbehälter 6 befindlichen Ventil 10 angeordnet. Das Ventil 10 wiederum weist eine Steuerung 11 auf. In Strömungsrichtung hinter dem Ventil 10 befindet sich die Ablaufvorrichtung 12 angeordnet. Unmittelbar hinter dem Ventil 10 befindet sich ein in Schwerkraftrichtung nach unten weisendes Leitungsstück 13, das zur Abzweigung 14 führt. Die Abzweigung 14 wiederum ist in Figur 1 noch einmal vergrößert am rechten Rand dargestellt.

In der Verlängerung des Leitungsstücks 13 ist die Probenaufnahmevorrichtung 15 angeordnet. Diese besteht aus einem im Wesentlichen zylindrischen Körper aus Edelstahl, der passgenau in das Leitungsstück in Verlängerung der Leitung 13 eingefügt ist. Dieses Edelstahlstück weicht insofern von einer zylindrischen Form ab, als dass das obere Stück leicht gewölbt ist. Entlang der Zylinderachse ist eine Bohrung 16 vorgesehen zur Aufnahme des Probenvolumens. Die beschriebene Wölbung ist so ausgebildet, dass Flüssigkeitstropfen, die sich an ihrer Oberfläche absetzen durch die Schwerkraft hinunter gleiten und an der Innenseite des verlängerten Rohrstücks der Leitung 13 bzw. am Außenrand des Zylinders entlanglaufen können und schließlich in das horizontal abzweigende Rohrstück 17 gelangen. Diese Wölbung des Zylinders der Probenaufnahmevorrichtung 15 am oberen Ende bildet also im Außenbereich eine Abflussrinne 18, die schließlich in die Flüssigkeitsleitung 17 mündet, sodass überschüssige Flüssigkeit, die nicht mehr das Probenvolumen befüllen kann, dennoch abfließt. In Schwerkraftrichtung unterhalb der Probenaufnahmevorrichtung 15 ist ein Ventil 19 mit einer Steuerung 20 angeordnet. Wird das Ventil 19 über die Steuerung 20 geöffnet, kann die im Probenvolumen angesammelte Flüssigkeit in einen Probensammelbehälter 21 gelangen. Die im Probensammelbehälter 21 gesammelter. Proben können über den Entleerhahn 25 entnommen werden. Der Rest der Flüssigkeit, welcher ablaufen soll, gelangt über die Rohrleitung 17 schließlich zum Endstück des Ablaufs 22. Dieses Endstück 22 besitzt ebenfalls in seinem Querschnitt eine rautenförmige Form, wobei in der Mantelfläche eine Vielzahl von Öffnungen angebracht ist. Am unteren Ende des Endstücks kann die Flüssigkeit auslaufen.

Würde diese Öffnung am unteren Ende des Endstücks jedoch verstopft, sc stehen an der Außenfläche der Raute weitere Öffnungen zur Verfügung sodass die Flüssigkeit auch darüber abfließen kann, ohne dass ein Rückstau in der Rohleitung 17 erfolgt. Um tatsächlich einen Rückstau hervorzurufen, muss entweder das gesamte Endstück, also die gesamte Raute, abgedeckt und alle Öffnungen verschlossen werden, was unter gewöhnlichen Umständen kaum der Fall ist. Ebenfalls würde ein Rückstau dann erfolgen, wenn absichtlich über das Endstück 22 durch die Leitung 17 Wasser entgegen der eigentlichen Stromrichtung geleitet würde, beispielsweise in dem ein Schlauch zu einer Wasserzufuhr durch die Leitung 17 sowie durch das Endstück 22 eingeführt wird.

Aus diesem Grund ist eine weitere Verzweigung 23 vorgesehen, welche nach oben hin abzweigt und über eine Krümmung in einem Stauungsanzeiger 24 mündet. Dieser Stauungsanzeiger 24 besteht aus einem Glasrohr bzw. einem verschlossenen Rohr, welches aus einem durchsichtigen Material besteht. Innen ist ein Stoff angeordnet, welcher sich im Kontakt mit Alkohol verfärbt. Wird beispielsweise durch eine Manipulation ein solcher Rückstau des Alkohol/Wassergemisches bewirkt, so gelangt ein Teil des Alkohol/Wassergemisches über die Verzweigung 23 schließlich in den Stauungsanzeiger 24, sodass sich die Stoffprobe dort sichtbar verfärbt. Ein Kontrolleur weiß damit, dass es zu einer Manipulation gekommen ist bzw. dass zumindest die entsprechende Volumenzählung ungültig ist.

Besonders vorteilhaft ist die gewählte Abzweigung 14 da die aus dem Volumenbehälter 6 entströmende Flüssigkeit zunächst durch die Leitung 13 direkt in Richtung der Probenaufnahmevorrichtung 15 gelangt, wobei das Probenvolumen 16 im Sinne einer Bohrung aufgefüllt wird. Dabei kommt es zu einer Durchmischung, da der geringere Widerstand ein Abfluss durch die Leitung 17 bedeutet, welche Senkrecht zur ursprünglichen Strömungsrichtung verläuft. Auch der Aufprall der abfließenden Flüssigkeit, die zunächst auf die Probenaufnahmevorrichtung prallt, ermöglicht eine Durchmischung.

Die Kontrollvorrichtung kann so ausgebildet bzw. programmiert sein, dass über die Steuerungen 8 und 20 die entsprechenden Ventile 7 und 19 gleichzeitig geöffnet bzw. geschlossen werden. Sind die Ventile 7 und 19 geschlossen, wird innerhalb des Zyklus das Ventil 10 geöffnet bzw. das Ventil 10 wieder geschlossen wenn die Ventile 7 und 19 geöffnet werden.

Ein entsprechender Volumenzähler kann insbesondere für Verschlussbrennereien im Zusammenhang mit entsprechenden Wasser/Alkoholgemischen bzw, für Branntwein eingesetzt werden. Typischerweise hat dann der Volumenbehälter 6 ein Fassungsvermögen von ca. 0,5 bis 1,0 Liter.
Denkbar ist grundsätzlich aber auch, dass eine derartige Apparatur auch in anderen Bereichen der Chemie oder der Verfahrenstechnik eingesetzt wird, in denen eine Volumenbestimmung einer durchfließenden Flüssigkeit stattfinden soll und bei der ferner Proben entnommen werden, welche ein definiertes Volumenverhältnis zum restlichen durchflossenen Volumen haben sollen.

Die Steuerung der Ventile kann grundsätzlich auf verschiedene Arten erfolgen; es kann sich um eine speicherprogrammierbare Steuerung (Abkürzung: SPS), aber auch um eine Relaissteuerung oder mechanische Steuerung handeln. SPS bieten den Vorteil, dass der Steuerungsablauf durch ein Programm bzw. eine Software bestimmt werden kann. Erfasste Sensorsignale werden über die Software logisch verarbeitet, und als Ergebnis wird ein Signal (hier an ein Ventil) ausgegeben.

Im Übrigen ist es auch denkbar, dass die Probenaufnahmevorrichtung 15 austauschbar gestaltet wird, beispielsweise derart, dass die Bohrung 16 unterschiedliche Querschnitte aufweist und somit unterschiedliches Probenvolumen aufnehmen kann. Grundsätzlich ist nicht ausgeschlossen, dass ein derartiger Volumenzähler auch für deutlich größere Anlagen verwendet wird und dementsprechend größer gebaut wird.

Der in Figur 1 dargestellte Volumenzähler ist wegen des Brand- bzw. Explosionsschutzes zwischen dem Zulauf 2 und dem Endstück 22 geschlossen ausgebildet, sodass keine Alkoholdämpfe entweichen können.

### Bezugszeichenliste:

- 1: Volumenzähler
- 2: Zulauf
- 3: Pufferbehälter
- 4: Ablauf des Pufferbehälters
- 5: Flüssigkeitssensor
- 6: Volumenbehälter
- 7: Ventil
- 8: Steuerung
- 9: Tarierstift
- 10: Ventil
- 11: Steuerung
- 12: Ablaufvorrichtung
- 13: Leitung
- 14: Abzweigung
- 15: Probenaufnahmevorrichtung
- 16: Bohrung
- 17: Flüssigkeitsleitung
- 18: Abflussrinne
- 19: Ventil
- 20: Steuerung
- 21: Probensammelbehälter
- 22: Endstück
- 23: Verzweigung
- 24: Stauungsanzeiger
- 25: Entleerhahn

## Patentansprüche

1. Volumenzähler (1) zur Bestimmung des Volumens einer durchfließenden Flüssigkeit und zur Entnahme eines definierten Probenvolumens aus der Flüssigkeit, insbesondere zur Bestimmung des Volumens und des Alkoholgehalts eines alkoholhaltigen Gemisches für Verschlussbrennereien, umfassend:
- einen Volumenbehälter (6) zur Aufnahme eines definierten Flüssigkeitsvolumens,
- eine Ablaufvorrichtung (12) zum Ablaufen der Flüssigkeit aus dem Volumenbehälter (6) und zur Entleerung des Volumenbehälters, wobei die Ablaufvorrichtung (12) eine von der Flüssigkeit durchströmbare Flüssigkeitsleitung (13, 17) umfasst,
**dadurch gekennzeichnet, dass**
die Ablaufvorrichtung (12) eine Abzweigung (14) aus der Flüssigkeitsleitung (13, 17) aufweist, um einen Teil der Flüssigkeit auszusondern, und die Abzweigung eine Probenaufnahmevorrichtung (15) zur Aufnahme eines definierten Probenvolumens umfasst.

2. Volumenzähler nach Anspruch 1, **dadurch gekennzeichnet, dass** zwischen dem Volumenbehälter und der Abzweigung ein Ventil (10) vorgesehen ist.

3. Volumenzähler nach einem der vorgenannten Ansprüche, **dadurch gekennzeichnet, dass** die Probenaufnahmevorrichtung (15) innerhalb der Abzweigung (14) angeordnet ist.

4. Volumenzähler nach einem der vorgenannten Ansprüche, **dadurch gekennzeichnet, dass** die Probenaufnahmevorrichtung (15) so angeordnet ist, dass diese auf dem Strömungsweg der aus dem Volumenbehälter (6) ablaufenden Flüssigkeit unmittelbar liegt und die ablaufende Flüssigkeit ihre Strömungsrichtung ändern muss, um der Flüssigkeitsleitung (13, 17) weiter zu folgen.

5. Volumenzähler nach einem der vorgenannten Ansprüche, **dadurch gekennzeichnet, dass** die Probenaufnahmevorrichtung eine Abflussrinne (18) umfasst, um überschüssige Flüssigkeit nach Füllen des Probenvolumens zurück in die Flüssigkeitsleitung (17) zu leiten.

6. Volumenzähler nach einem der vorgenannten Ansprüche, **dadurch gekennzeichnet, dass** die Probenaufnahmevorrichtung (15) eine Bohrung (16) umfasst, deren Volumen dem Probevolumen entspricht.

7. Volumenzähler nach einem der vorgenannten Ansprüche, **dadurch gekennzeichnet, dass** zwischen der Öffnung der Bohrung (16) zur Abflussrinne (18) in Strömungsrichtung ein Gefälle ausgebildet ist, sodass die überschüssige Flüssigkeit zur Abflussrinne gelangen kann.

8. Volumenzähler nach einem der vorgenannten Ansprüche, **dadurch gekennzeichnet, dass** die Abzweigung über ein Ventil (19) mit einem Probensammelbehälter (21) zum Auffangen des Probevolumens verbunden ist.

9. Volumenzähler nach einem der vorgenannten Ansprüche, **dadurch gekennzeichnet, dass** die Umrisslinien des Volumenbehälters (6) in Strömungsrichtung weisen, sodass beim Befüllen mit Flüssigkeit keine Luftblasen gebildet werden, insbesondere dass der Volumenbehälter einen rautenförmigen Querschnitt aufweist.

10. Volumenzähler nach einem der vorgenannten Ansprüche, **dadurch gekennzeichnet, dass** ein Zulauf (2) vorgesehen ist, der über ein Ventil (7) mit dem Volumenbehälter (6) verbunden ist.

11. Volumenzähler nach einem der vorgenannten Ansprüche, **dadurch gekennzeichnet, dass** in Strömungsrichtung vor dem Ventil (7), das dem Volumenbehälter (6) vorgeschaltet ist, ein Pufferbehälter (3) angeordnet ist, sodass durch Überfüllen des Volumenbehälters über das vorgeschaltete Ventil (7) hinaus eine definierte Abmessung des Flüssigkeitsvolumen ermöglicht wird.

12. Volumenzähler nach einem der vorgenannten Ansprüche, **dadurch gekennzeichnet, dass** der Pufferbehälter (3) einen Füllstandssensor (5) umfasst, um eine Überfüllung des Volumenbehälters zu erfassen.

13. Volumenzähler nach einem der vorgenannten Ansprüche, **dadurch gekennzeichnet, dass** ein Tarierstift (9) vorhanden ist, der innerhalb des Volumenzählers, insbesondere innerhalb des Volumenbehälters, angeordnet ist, und dass der Tarierstift (9) in dem Bereich angeordnet ist, in dem der Zulauf mit dem Volumenbehälter (6) verbunden ist, sodass beim Einleiten der Flüssigkeit in den Volumenbehälter diese mit dem Tarierstift in Kontakt kommt und dadurch durchmischt wird.

14. Volumenzähler nach einem der vorgenannten Ansprüche, **dadurch gekennzeichnet, dass** wenigstens eines der Ventile (7, 10, 19) als pneumatisches oder elektrisches oder hydraulisches Ventil ausgebildet ist.

15. Volumenzähler nach einem der vorgenannten Ansprüche, **dadurch gekennzeichnet, dass** das dem Volumenbehälter vorgeschaltete Ventil (7) und das zwischen Probenvolumenaufnahmevorrichtung und Probensammelbehälter geschaltete Ventil (19) zusammengeschaltet sind, sodass eine gleichzeitige Schaltung der Ventile (7, 19) ermöglicht ist.

## Claims

1. A volume meter (1) for determining the volume of a liquid flowing through same and for taking a defined sample volume from the liquid, in particular for determining the volume and the alcohol content of an alcohol-containing mixture for bonded distilleries, comprising:
- a volume container (6) for receiving a defined volume of liquid,
- a drain device (12) for draining the liquid from the volume container (6) and for emptying the volume container, wherein the drain device (12) comprises a liquid line (13, 17) through which the liquid can flow,
**characterised in that**
the drain device (12) has a branch (14) from the liquid line (13, 17) to separate out a portion of the liquid, and the branch comprises a sample receiving device (15) for receiving a defined sample volume.

2. The volume meter according to claim 1, **characterised in that** a valve (10) is provided between the volume container and the branch.

3. The volume meter according to one of the preceding claims, **characterised in that** the sample receiving device (15) is arranged within the branch (14).

4. The volume meter according to one of the preceding claims, **characterised in that** the sample receiving device (15) is arranged such that same lies directly on the flow path of the liquid draining from the volume container (6) and the draining liquid must change the flow direction thereof in order to continue following the liquid line (13, 17).

5. The volume meter according to one of the preceding claims, **characterised in that** the sample receiving device comprises a drainage channel (18) to direct excess liquid back into the liquid line (17) after filling the sample volume.

6. The volume meter according to one of the preceding claims, **characterised in that** the sample receiving device (15) comprises a borehole (16), the volume of which corresponds to the sample volume.

7. The volume meter according to one of the preceding claims, **characterised in that** a gradient is configured between the opening of the borehole (16) to the drainage channel (18) in the flow direction so that the excess liquid can reach the drainage channel.

8. The volume meter according to one of the preceding claims, **characterised in that** the branch is connected via a valve (19) to a sample collecting container (21) for collecting the sample volume.

9. The volume meter according to one of the preceding claims, **characterised in that** the contour lines of the volume container (6) point in the flow direction so that no air bubbles are formed when being filled with liquid, in particular that the volume container has a diamond-shaped cross section.

10. The volume meter according to one of the preceding claims, **characterised in that** an inlet (2) is provided which is connected via a valve (7) to the volume container (6).

11. The volume meter according to one of the preceding claims, **characterised in that** a buffer container (3) is arranged in the flow direction before the valve (7), which is upstream of the volume container (6), so that a defined dimension of the volume of liquid is made possible by overfilling the volume container beyond the upstream valve (7).

12. The volume meter according to one of the preceding claims, **characterised in that** the buffer container (3) comprises a filling level sensor (5) to detect an overfilling of the volume container.

13. The volume meter according to one of the preceding claims, **characterised in that** there is a tare pin (9), which is disposed within the volume meter, in particular within the volume container, and that the tare pin (9) is arranged in the region in which the inlet is connected to the volume container (6) so that when the liquid is introduced into the volume container same comes into contact with the tare pin and is thereby thoroughly mixed.

14. The volume meter according to one of the preceding claims, **characterised in that** at least one of the valves (7, 10, 19) is designed as a pneumatic or electric or hydraulic valve.

15. The volume meter according to one of the preceding claims, **characterised in that** the valve (7) that is upstream of the volume container and the valve (19) that is connected between the sample volume receiving device and the sample collecting container are interconnected so that a simultaneous switching of the valves (7, 19) is made possible.

## Revendications

1. Compteur volumétrique (1) pour déterminer le volume d'un liquide traversant et pour prélever un volume d'échantillon défini dans le liquide, en particulier pour déterminer le volume et la teneur en alcool d'un mélange alcoolique pour distillerie sous scellés, comprenant :
- un récipient de volume (6) destiné à recevoir un volume défini de liquide,
- un dispositif de vidange (12) pour évacuer le liquide du récipient de volume (6) et pour vider le récipient de volume, le dispositif de vidange (12) comprenant une conduite de liquide (13, 17) à travers laquelle le liquide peut s'écouler,
**caractérisé en ce que**
le dispositif de vidange (12) présente une ramification (14) de la conduite de liquide (13, 17) pour séparer une partie du liquide et la ramification comprend un dispositif de réception d'échantillon (15) pour recevoir un volume d'échantillon défini.

2. Compteur volumétrique selon la revendication 1, **caractérisé en ce qu'**une soupape (10) est prévue entre le récipient de volume et la ramification.

3. Compteur volumétrique selon une des revendications précédentes, **caractérisé en ce que** le dispositif de réception d'échantillon (15) est disposé dans la ramification (14).

4. Compteur volumétrique selon une des revendications précédentes, **caractérisé en ce que** le dispositif de réception d'échantillon (15) est agencé de sorte qu'il se trouve directement sur le trajet d'écoulement du liquide qui s'écoule du récipient de volume (6) et que le liquide qui s'écoule doive changer de direction d'écoulement pour pouvoir poursuivre dans la conduite de liquide (13, 17).

5. Compteur volumétrique selon une des revendications précédentes, **caractérisé en ce que** le dispositif de réception d'échantillon comprend un canal d'écoulement (18) pour diriger l'excès de liquide après le remplissage du volume d'échantillon, à nouveau dans la conduite de liquide (17).

6. Compteur volumétrique selon une des revendications précédentes, **caractérisé en ce que** le dispositif de réception d'échantillon (15) comprend un alésage (16) dont le volume correspond au volume de l'échantillon.

7. Compteur volumétrique selon une des revendications précédentes, **caractérisé en ce qu'**une pente est formée entre l'ouverture de l'alésage (16) et le canal d'écoulement (18) dans le sens de l'écoulement, de sorte que l'excès de liquide puisse atteindre le canal d'écoulement.

8. Compteur volumétrique selon une des revendications précédentes, **caractérisé en ce que** la ramification est reliée par une soupape (19) à un récipient collecteur d'échantillon (21) pour collecter le volume d'échantillon.

9. Compteur volumétrique selon une des revendications précédentes, **caractérisé en ce que** le récipient de volume (6) présente des contours projetés dans le sens de l'écoulement, de sorte que lors du remplissage de liquide, il ne se forme pas de bulles d'air, en particulier que le récipient de volume présente une section transversale en forme de losange.

10. Compteur volumétrique selon une des revendications précédentes, **caractérisé en ce qu'**une alimentation (2) qui est reliée par une soupape (7) au réservoir de volume (6) est prévue.

11. Compteur volumétrique selon une des revendications précédentes, **caractérisé en ce que**, en amont dans le sens de l'écoulement de la soupape (7), qui est située en amont du récipient de volume (6), un récipient tampon (3) est agencé, de sorte que par débordement du récipient de volume par le biais de la soupape (7), une mesure définie du volume de liquide soit rendue possible.

12. Compteur volumétrique selon une des revendications précédentes, **caractérisé en ce que** le récipient tampon (3) comprend un capteur de niveau (5) pour détecter un débordement du récipient de volume.

13. Compteur volumétrique selon une des revendications précédentes, **caractérisé en ce qu'**une broche de tarage (9) est présente, disposée dans le compteur volumétrique, en particulier dans le récipient de volume et **en ce que** la broche de tarage (9) est disposée dans la région où l'alimentation est reliée au récipient de volume (6) de sorte que, lors de l'introduction du liquide dans le récipient de volume, celui-ci entre en contact avec la broche de tarage et soit ainsi mélangé.

14. Compteur volumétrique selon une des revendications précédentes, **caractérisé en ce qu'**au moins une des soupapes (7, 10, 19) est conçue comme une soupape pneumatique, électrique ou hydraulique.

15. Compteur volumétrique selon une des revendications précédentes, **caractérisé en ce que** la soupape (7) en amont du récipient de volume et la soupape (19) reliée entre le dispositif de réception du volume d'échantillon et le récipient de collecte d'échantillons sont interconnectées, de sorte qu'une commutation simultanée des soupapes (7, 19) soit rendue possible.
